# EUROPEAN PATENT APPLICATION

(11) **EP 3 978 446 A1**
(43) Date of publication of application: **06.04.2022**
(21) Application number: 20736392.0
(22) Date of filing: 01.06.2020
(51) Int. Cl.: C02F 1/48

(54) **PROCESS FOR SEPARATING MICROPLASTICS FROM AQUEOUS MATRICES**

(30) Priority: 31.05.2019 ES 201930485
(71) Applicant: Universidad Autónoma de Madrid, 28049 Madrid (ES)
(72) Inventor: MUÑOZ GARCÍA, Macarena, 28049 Madrid (ES); NIETO-SANDOVAL RODRÍGUEZ, Julia, 28049 Madrid (ES); MARTÍNEZ DE PEDRO, Zahara, 28049 Madrid (ES); CASAS DE PEDRO, José Antonio, 28049 Madrid (ES)
(74) Representative: ABG Intellectual Property Law, S.L.
(86) International application number: PCT/ES2020/070357
(87) International publication number: WO 2020/240069

(57) **Abstract**

The present invention relates to a process for separating microplastics from aqueous matrices based on the interaction of said microplastics with magnetic minerals containing iron, such as magnetite, which gives rise to the formation of a microplastic/magnetic iron mineral aggregate that can be readily separated from the water by applying a magnetic field.

## Description

### Field of the Invention

The present invention relates to a process for separating microplastics from aqueous matrices by means of their interaction with magnetic iron minerals, such as magnetite.

### Background of the Invention

The wide-spread presence of microplastics in the environment has become a global environmental concern and a growing problem as the result of the exponential increase in the production of plastics. This production has not stopped growing worldwide since the first synthetic polymers were developed in the mid 20^{th} century. In that sense, in the year 2017 over 348 million tons of plastics were produced worldwide (PlasticsEurope, 2018). Standing out among these plastics are primarily polypropylene (19.3%), high-density polyethylene (17.5%), low-density polyethylene (12.3%), polyvinyl chloride (10.2%), polyurethane (7.7%), polyethylene terephthalate (7.5%), and polystyrene (6.6%). In Europe there are about 60,000 companies operating in the plastic sector, which generated in the year 2017 about 350,000 million Euros (PlasticsEurope, 2018). Evidently, the high activity of this industry is the result of a high demand for plastic in different sectors, such as in the packaging (39.9%), construction (19.7%), automotive (10%), electrical and electronic (6.2%), and agricultural (3.3%) sectors.

The main consequence of the high production of plastics is the generation of large amounts of these wastes which, to a large extent, end up in the environment, especially in the marine environment (GESAMP Report and Studies, 90 (2015), ISSN: 1020-4873). Between 4.8 and 12.7 million tons of plastic wastes are estimated to be dumped in the oceans each year, making it an environmental problem of maximum importance (Jambeck, J.R. et al., Science, 347 (2015) 768-771). This is fundamentally due to their high persistence, because they are estimated to take between hundreds and thousands of years to degrade (Barnes, D.K.A. et al., Philosophical Transactions of the Royal Society of London B: Biological Sciences 364 (2009)1985-1998). Moreover, this is compounded by the fact that these materials can act as vectors of other persistent pollutants such as chlorinated biphenyls, polycyclic aromatic hydrocarbons, and even heavy metals, or allow pathogenic microorganisms or invasive species to grow on their surface (GESAMP Report and Studies, 90 (2015), ISSN: 1020-4873). Among the various categories of pollution due to plastics, microplastics stand out, with these plastics having been found in virtually all ecosystems, including inland and ocean water, sediments, air, and soils (Grbic, J. et al., Environmental Science and Technology Letters, 6 (2019) 68-72). Consequently, microplastics are also present in organisms, fundamentally in aquatic organisms (Cole, M. et al., Nature Scientific Reports, 4: 4528 (2014) 1-8), so there is considerable concern for the potential damages that their presence may have both in humans and in fauna.

The first reference related to the pollution caused by microplastics dates back to the year 1972 (Carpenter, E.J. et al., Science, 175 (1972) 1240-1241), although research in this field has fundamentally taken place in the last decade. In fact, the definition of microplastics was established in the year 2008 in the first International Research Workshop on the Occurrence, Effects, and Fate of Microplastic Marine Debris, organized by the National Oceanic and Atmospheric Administration (NOAA). In that workshop, it was established that microplastics are all those plastics having a size smaller than 5 mm.

The separation of microplastics from different environmental matrices, fundamentally from aqueous matrices, constitutes an important challenge for the scientific community. In fact, there is currently no standardized method which allows separating microplastics from aqueous matrices. In the state of the art, there are several methods used in the laboratory for separating microplastics, with visual sorting and separation, filtration, and flotation or separation by density being highlighted (Crawford, C.B. et al., Microplastic Pollutants, (2017) 203-218; Miller, M.E. et al., Marine Pollution Bulletin, 123 (2017) 6-18). Visual sorting and separation is based on examining the aqueous matrix with the human eye, either directly for larger sized microplastics (between 1 and 5 mm) or by means of an optical or fluorescence microscope for smaller sized microplastics (<1 mm). Possible microplastics are detected and sorted considering their physical characteristics, such as their shape, size, color, and absent biological structure, and they are subsequently confirmed by means of spectroscopic techniques. Filtration is the most commonly used method for removing microplastics from aqueous matrices. It is effective, although it does require high power consumption and continuous cleaning of the chosen filtration system. In the case of flotation, the separation of microplastics is carried out by a difference in densities using solutions of different types of salt and, therefore, with different densities. One of the most widely used salts is NaCl (1.2 g mL-¹), given its high availability, low cost, and environmental nature, although other salts such as ZnCl₂ (1.5-1.7 g mL⁻¹) and Nal (1.6-1.8 g mL⁻¹) are also widely used (Van Cauwenberghe, L. et al., Marine Environmental Research, 111 (2015) 5-17). In all the preceding cases, the methods of separating microplastics are focused on the analysis of said microplastics and, with the exception of filtration, could not be used as a treatment method for separating them from the medium, such as in a wastewater purification plant, in a drinking water treatment plant, or in a seawater-based salt production plant. Furthermore, they present certain drawbacks. For example, visual sorting and separation consumes a great deal of time, so it further entails a high cost, and it is not altogether reliable, because it is observer-dependent. In turn, filtration is severely limited due to saturation of the filters not only by microplastics but also by the presence of other particles in the medium. In separation by density, not all types of microplastics can be separated, and furthermore, some of the chemical agents used are environmentally hazardous or present a high cost.

The most novel method recently developed for the separation of microplastics is based on electrostatic separation. This technique utilizes the electric charge accumulation properties of plastics to facilitate their separation and has allowed obtaining very promising results with separation yields of up to 99% (Felsing, S. et al., Environmental Pollution, 234 (2018) 20-28). In fact, most patents developed for the separation of microplastics have been based up until now on this principle (Ying, Z. et al., Chinese patent application CN108593401 A; Baoyuan, G. et al., Chinese patent application CN108407145 A; Cheng, Z. et al., Chinese patent application CN107553776 A; Ward, M., United States patent US 8,944,253). Nevertheless, it does present some drawbacks, such as the high cost of the equipment that is required, the long time needed to carry out the separation of microplastics, and the difficulty in scaling up the system for the treatment of large volumes of water.

A recently published paper points to using magnetic properties as a suitable mechanism for the separation of microplastics in aqueous matrices (Grbic, J. et al., Environmental Science and Technology Letters, 6 (2019) 68-72). In said study, which is clearly aimed at the separation of microplastics as a method of sampling same, extraction was performed using synthetic iron nanoparticles. Commercial iron nanoparticles measuring 25 nm which were modified with hexadecyltrimethoxysilane to make them hydrophobic and thus achieve interaction with the microplastics were used. The method proved to be rather effective, with a recovery of 92% of different types of microplastics with sizes comprised from 10 to 20 µm. However, given the high cost of the nanoparticles used, their complex synthesis, and the slim possibility of being regenerated and reused, its potential application for water treatment is limited.

In view of this prior art, the development of a process that allows rapidly and effectively separating microplastics, regardless of their nature and size, from different aqueous matrices using low-cost and environmentally-friendly materials would represent a crucial finding in this field, where there is currently no specific and viable technique for separating same from the aqueous medium.

### Summary of the Invention

The inventors have unexpectedly discovered a process for separating microplastics with high rates of separation, using low-cost and environmentally-friendly materials using magnetic iron mineral particles. The process is universal with respect to the chemical nature of the microplastic, i.e., it works with all the types of microplastics regardless of their chemical composition and said process also achieves high rates of separation of microplastics regardless of their size. As shown in the examples, the rates of separation are greater than 95%. The process of the invention also achieves the separation of microplastics from aqueous matrices having different characteristics (for example, pH and salinity). The process of the present invention is particularly advantageous because it entails a significant reduction of the time needed to achieve separation compared to other processes in the state of the art. The process of the present invention has the additional advantage of the simplicity of the equipment that is required and the viability of its scaling-up for the treatment of large volumes of water.

Therefore, the present invention relates to a process for separating microplastics from an aqueous matrix comprising microplastics, the process comprising:
a) providing an aqueous matrix comprising microplastics,
b) adding magnetic iron mineral particles the average diameter of which is comprised between 0.1 and 500 µm to the aqueous matrix provided in step a) to form microplastic/magnetic iron mineral particle aggregates, and
c) separating the microplastic/magnetic iron mineral particle aggregates from the mixture obtained in step b) by applying a magnetic field.

### Description of the Figures

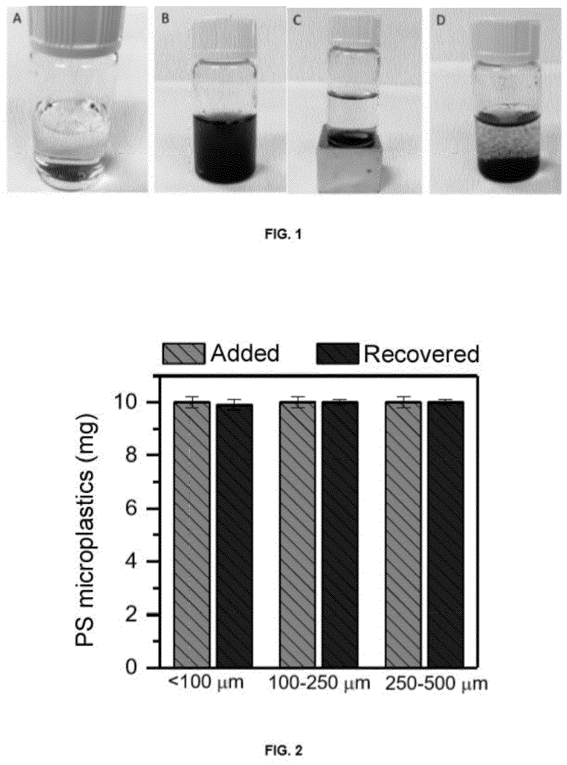

Figure 1: Photograph of the suspension of polystyrene microplastics in salt water (1.A), photograph of the suspension of polystyrene microplastics and magnetite particles in salt water (1.B), photograph of the suspension of polystyrene microplastics and magnetite particles in salt water under the influence of a magnet (1.C), and photograph of the same suspension in salt water once the magnet is removed (1.D).
Figure 2: Results obtained in the addition and separation experiments for adding and separating polystyrene microplastics of different sizes in salt water. The error bars show the standard deviations.

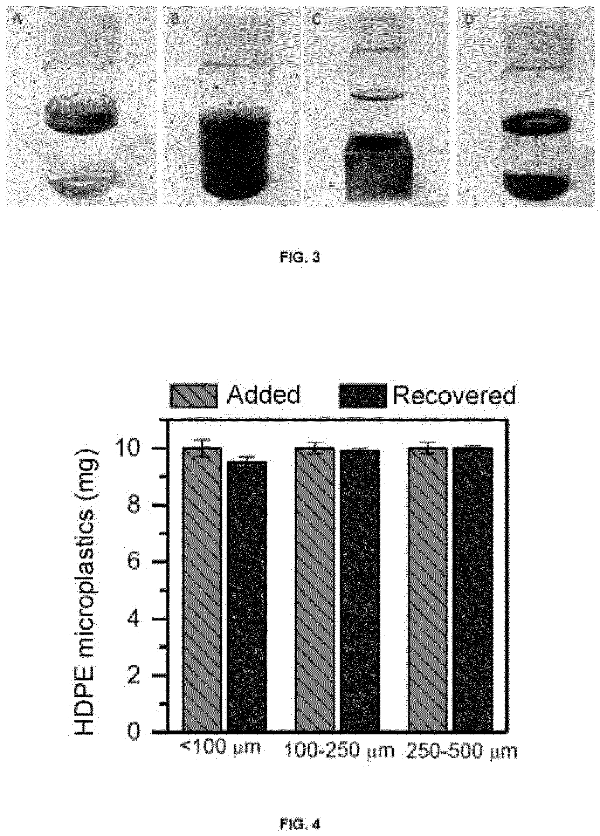

Figure 3: Photograph of the suspension of high-density polyethylene microplastics in salt water (1.A), photograph of the suspension of high-density polyethylene microplastics and magnetite particles in salt water (1.B), photograph of the suspension of high-density polyethylene microplastics and magnetite particles in salt water under the influence of a magnet (1.C), and photograph of the same suspension in salt water once the magnet is removed (1.D).
Figure 4: Results obtained in the addition and separation experiments for adding and separating high-density polyethylene microplastics of different sizes in salt water. The error bars show the standard deviations.

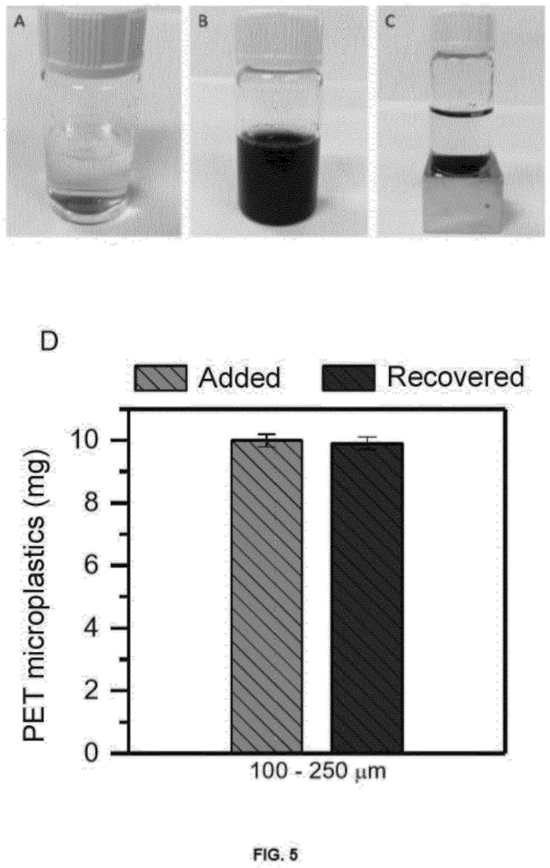

Figure 5: Photograph of the suspension of polyethylene terephthalate microplastics in salt water (5.A), photograph of the suspension of polyethylene terephthalate microplastics and magnetite particles in salt water (5.B), photograph of the suspension of polyethylene terephthalate microplastics in salt water and magnetite particles in salt water under the influence of a magnet (5.C), and results obtained in the addition and separation experiment for adding and separating polyethylene terephthalate microplastics in salt water (5.D). The error bars show the standard deviations.

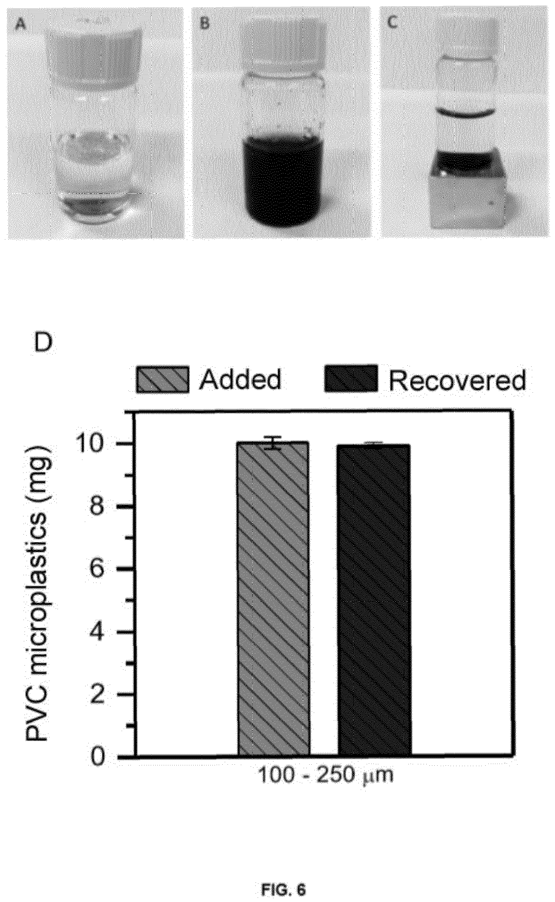

Figure 6: Photograph of the suspension of polyvinyl chloride microplastics in salt water (6.A), photograph of the suspension of polyvinyl chloride microplastics and magnetite particles in salt water (6.B), photograph of the suspension of polyvinyl chloride microplastics in salt water and magnetite particles in salt water under the influence of a magnet (6.C), and results obtained in the addition and separation experiment for adding and separating polyvinyl chloride microplastics in salt water (6.D). The error bars show the standard deviations.

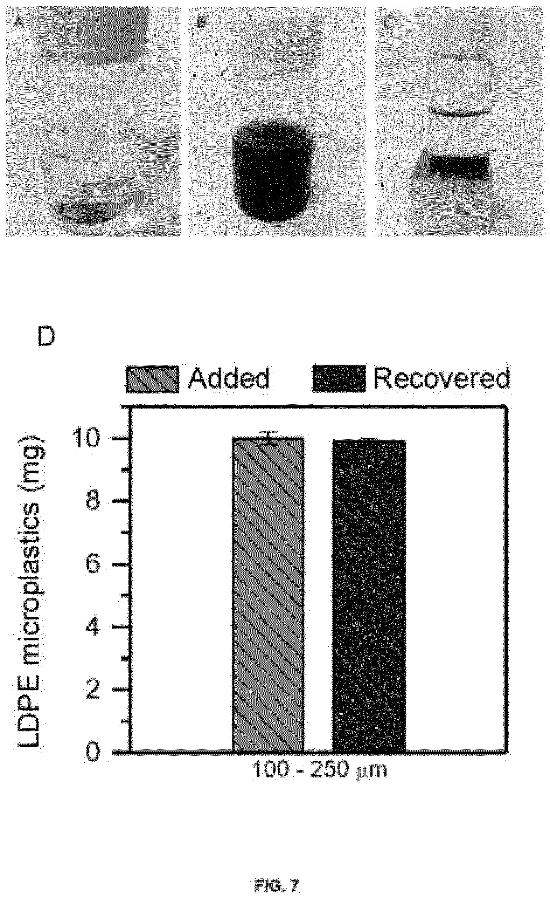

Figure 7: Photograph of the suspension of low-density polyethylene microplastics in salt water (7.A), photograph of the suspension of low-density polyethylene microplastics and magnetite particles in salt water (7.B), photograph of the suspension of low-density polyethylene microplastics in salt water and magnetite particles in salt water under the influence of a magnet (7.C), and results obtained in the addition and separation experiment for adding and separating low-density polyethylene microplastics in salt water (7.D). The error bars show the standard deviations.

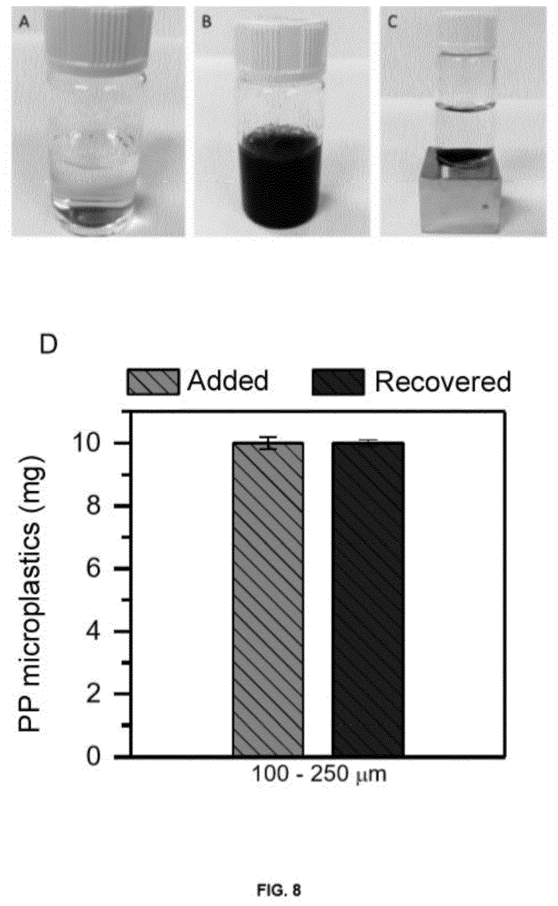

Figure 8: Photograph of the suspension of polypropylene microplastics in salt water (8.A), photograph of the suspension of polypropylene microplastics and magnetite particles in salt water (8.B), photograph of the suspension of polypropylene microplastics in salt water and magnetite particles in salt water under the influence of a magnet (8.C), and results obtained in the addition and separation experiment for adding and separating polypropylene microplastics in salt water (8.D). The error bars show the standard deviations.

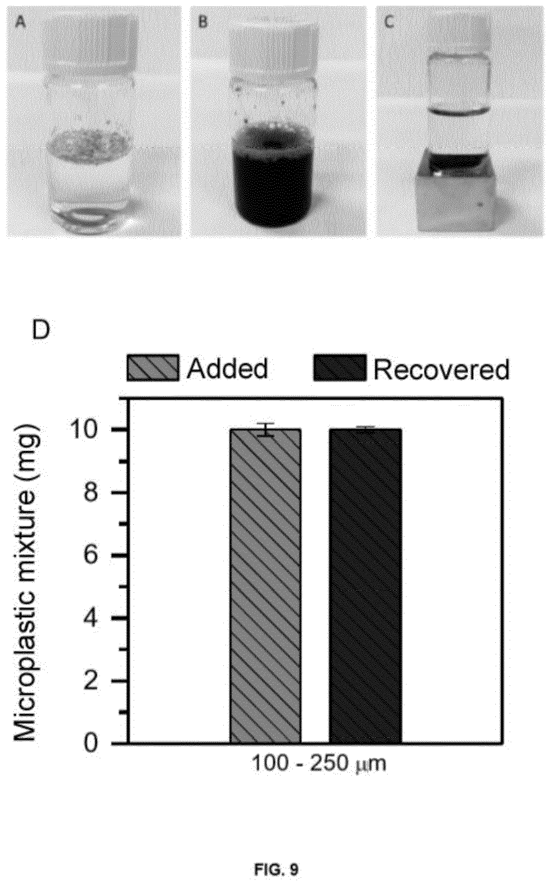

Figure 9: Photograph of the suspension of the suspension of polyethylene terephthalate, high-density polyethylene, polyvinyl chloride, low-density polyethylene, polypropylene, and polystyrene microplastics in salt water (9.A), photograph of the same suspension of microplastics and magnetite particles in salt water (9.B), photograph of the same suspension of microplastics in salt water and magnetite particles in salt water under the influence of a magnet (9.C), and results obtained in the addition and separation experiment for adding and separating the same suspension of microplastics in salt water (9.D). The error bars show the standard deviations.

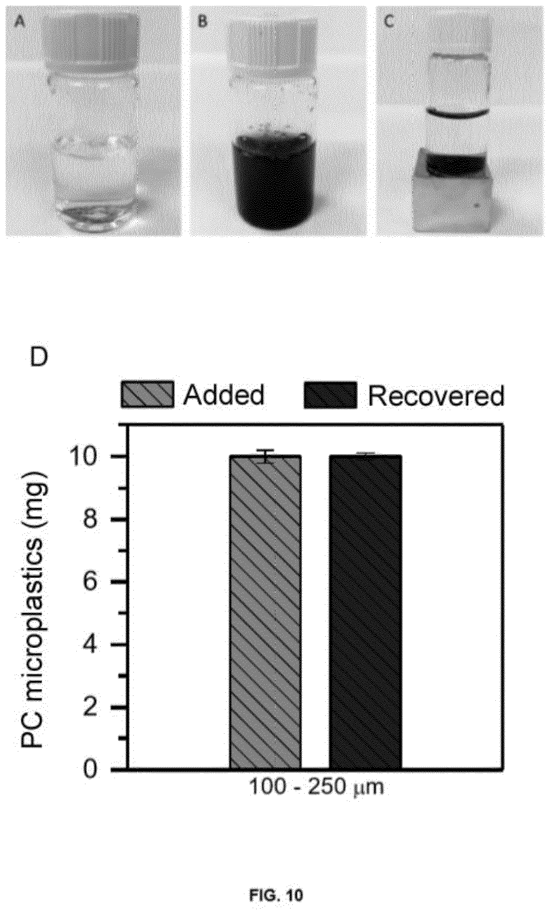

Figure 10: Photograph of the suspension of polycarbonate microplastics in salt water (10.A), photograph of the suspension of polycarbonate microplastics and magnetite particles in salt water (10.B), photograph of the suspension of polycarbonate microplastics in salt water and magnetite particles in salt water under the influence of a magnet (10.C), and results obtained in the addition and separation experiment for adding and separating polycarbonate microplastics in salt water (10.D). The error bars show the standard deviations.

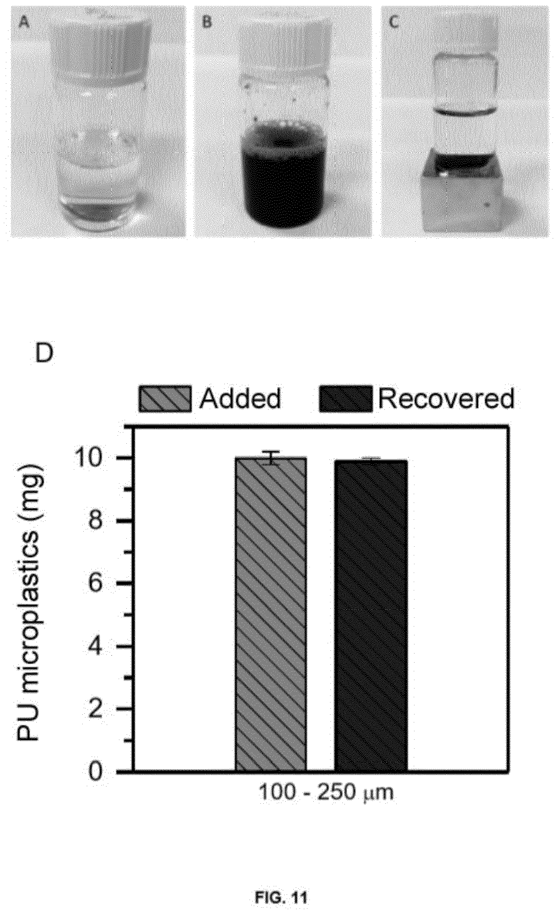

Figure 11: Photograph of the suspension of polyurethane microplastics in salt water (10.A), photograph of the suspension of polyurethane microplastics and magnetite particles in salt water (10.B), photograph of the suspension of polyurethane microplastics in salt water and magnetite particles in salt water under the influence of a magnet (10.C), and results obtained in the addition and separation experiment for adding and separating polyurethane microplastics in salt water (10.D). The error bars show the standard deviations.

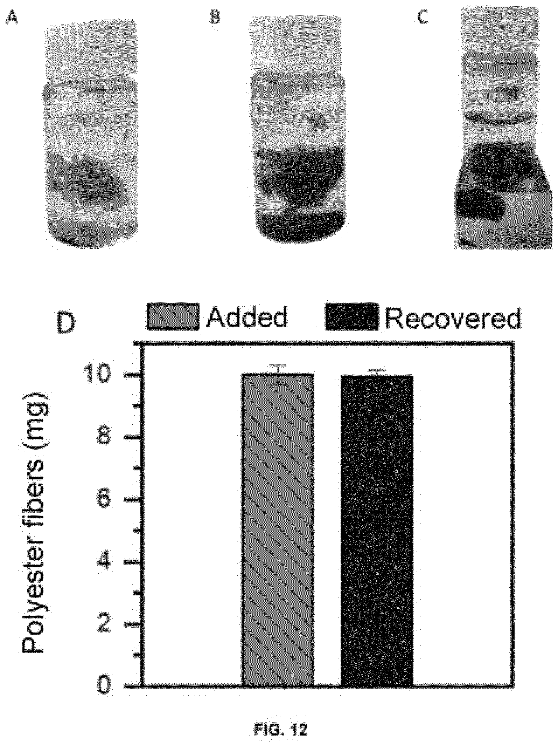

Figure 12: Photograph of the suspension of polyester fibers in salt water (12.A), photograph of the suspension of polyester fibers and magnetite particles in salt water (12.B), photograph of the suspension of polyester fibers in salt water and magnetite particles in salt water under the influence of a magnet (12.C), and results obtained in the addition and separation experiment for adding and separating polyester fibers in salt water (12.D). The error bars show the standard deviations.

### Detailed Description of the Invention

The present invention relates to a process for separating microplastics from an aqueous matrix comprising microplastics, the process comprising:
a) providing an aqueous matrix comprising microplastics,
b) adding magnetic iron mineral particles the average diameter of which is comprised between 0.1 and 500 µm to the aqueous matrix provided in step a) to form microplastic/magnetic iron mineral particle aggregates, and
c) separating the microplastic/magnetic iron mineral particle aggregates from the mixture obtained in step b) by applying a magnetic field.

In the context of the present invention, the term "microplastic" or "microplastics" refers to a plastic material with an average diameter of less than 5 mm, including the most recent definitions in the field of microplastics which classify said particles as mesoplastics (1 mm - 5 mm), microplastics (0.1 µm - 1 mm), and nanoplastics (<0.1 µm) [Andrady, A.L. Maine Anthropogenic Litter, Springer Int. Pub. (2015) 57-72]. The term "microplastic" or "microplastics" preferably refers to those with an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm. Measuring the size of microplastics involves the prior separation thereof from the aqueous matrix by means of vacuum filtration using a microporous membrane filter with a pore size of not more than 0.1 µm, and the subsequent drying thereof either at room temperature or in a drying oven at a temperature of not more than 100°C. The filter containing the microplastics is then analyzed by means of light microscopy, for example using the conditions described in the examples. The length and width of the microplastics are measured, and they are assigned the size of the largest dimension (length).

The microplastics can be formed by any plastic material, preferably synthetic organic polymers, such as polyesters, particularly polyester fibers and polyethylene terephthalates (PET), polyethylenes (PE) including high-density polyethylenes (HDPE) and low-density polyethylenes (LDPE), polyvinyl chlorides (PVC), polypropylenes (PP), polystyrenes (PS), polycarbonates (PC), polyurethanes (PU), and polyester, such as polyester fibers.

The term "polyester" refers to polymers obtained by means of an esterification reaction between a polyacid and a polyalcohol.

"Polyester fibers" refer to a linear polymer containing ester groups formed by the esterification of a diol and the terephthalic acid.

"Polyethylene terephthalate" or "PET" is a polymer that can be obtained by means of a reaction of polycondensation between terephthalic acid and ethylene glycol. Polyethylene terephthalate has the following structure.

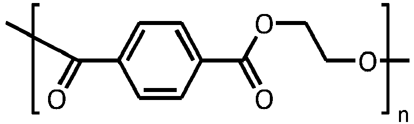

"Polyethylene" or "PE" refers to a polymer that can be obtained by the polymerization of ethylene. Polyethylene has the following structure.

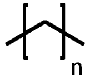

"High-density polyethylene" or "HDPE" refers to a polyethylene the density of which is comprised in the range of 0.930 to 0.970 g mL⁻¹. "Low-density polyethylene" or "LDPE" refers to a polyethylene the density of which is comprised in the range of 0.917 to 0.930 g mL⁻¹.

"Polyvinyl chloride" or "PVC" refers to a polymer that can be obtained by the polymerization of vinyl chloride. Polyvinyl chloride has the following structure.

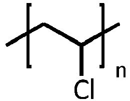

"Polypropylene" or "PP" refers to a polymer that can be obtained by the polymerization of propylene. Polypropylene has the following structure.

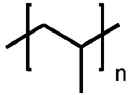

"Polystyrene" or "PS" refers to a polymer that can be obtained by the polymerization of styrene. Polystyrene has the following structure.

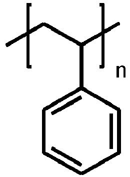

"Polycarbonate" or "PC" refers to a polymer comprising functional groups attached by carbonate groups (-O-C=O)-O-), such as for example diallyl diethylene glycol polycarbonate, or the most widely known, bisphenol A polycarbonate, the structure of which is shown below.

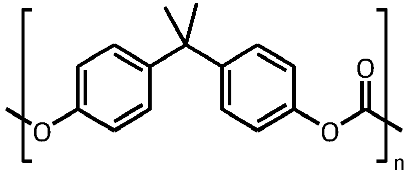

"Polyurethane" or "PU" refers to a polymer that can be obtained by the condensation of polyols, among which ethylene glycol and propylene glycol stand out, and polyisocyanates, among which methylene diphenyl diisocyanate (MDI) and the toluene diisocyanate (TDI) stand out, giving rise to urethane groups (-NH-(C=O)-O-) in the structure of the polymer. There is a wide range of polyurethanes due to the range of polyisocyanates and polyols that can be used to form them.

In a preferred embodiment, the microplastic is selected from the group consisting of polyester, particularly polyester fibers and polyethylene terephthalate, high-density polyethylene, polyvinyl chloride, low-density polyethylene, polypropylene, polystyrene, polycarbonate, polyurethane, polyester, and mixtures thereof. In another preferred embodiment, the microplastic is selected from the group consisting of polyethylene terephthalate, high-density polyethylene, polyvinyl chloride, low-density polyethylene, polypropylene, polystyrene, polycarbonate, polyurethane, and mixtures thereof. An advantage of the process of the invention is its universal character because magnetic separation is effective regardless of the chemical nature of the microplastic.

The expression "aqueous matrix" refers to a composition containing water as its major component, preferably containing at least 80% by weight of water with respect to the total weight of the composition, more preferably at least 85%, even more preferably at least 90%, even more preferably at least 95%. The aqueous matrix may furthermore contain other ingredients that are already dissolved (for example, salts such as NaCI) or in suspension. Particularly, the aqueous matrix is selected from the group consisting of wastewater (including domestic, urban, industrial, agricultural, and livestock farming wastewater), sea water, river water, lake water, groundwater, tap water, or a mixture thereof. Therefore, wastewater purification plants, drinking water treatment plants, the agri-food industry (for example fish farms), sources of water for human consumption, water facilities for recreational purposes (for example, swimming pools), among others, are facilities of interest for the application of the process of the present invention.

The process of the present invention allows the separation of microplastics regardless of the salinity of the water. It is effective in both fresh water, with low concentrations of salts of less than 0.2 g/L, and in salt water, with a salinity of 35 g/L. Preferably, the aqueous matrix has a salinity in the range of 0.05 to 50 g L⁻¹, more preferably of 0.1 to 35 g L⁻¹.

The term "salinity" refers to the concentration of inorganic salts in the aqueous matrix. The most common salts in aqueous matrices are cation salts selected from the group consisting of lithium, sodium, potassium, calcium, magnesium, strontium, and barium, with anions selected from the group consisting of fluoride, chloride, bromide, iodide, sulfate, nitrate, phosphate, carbonate, and borate, such as for example, NaCl, MgCl₂, Na₂CO₃ and Na₃PO₄, among others. Salinity can be determined by means of a conductivity meter, taking the electrical conductivity measurement at 25°C.

Step a) of the process of the invention is to provide an aqueous matrix comprising microplastics. The aqueous matrix can be provided in a continuous manner if the process is performed continuously or can be provided in batches if the process is in batches (or discontinuously). The volume of the aqueous matrix provided in step a) preferably is from 0.01 to 10000 L.

In a preferred embodiment, the pH and/or the temperature of the aqueous matrix provided in step a) is conditioned before performing step b) such that:
- the pH is in the range of 1 to 13, and/or
- the temperature is in the range of 5 to 95°C.

Preferably, the pH of the aqueous matrix must be between 1 and 13, more preferably between 2 and 12, more preferably between 3 and 10, more preferably between 5 and 9, even more preferably between 6 and 8, most preferably about 7. The pH of the aqueous matrix can be conditioned by adding a base, such as for example, sodium hydroxide, potassium hydroxide, or sodium carbonate, among others, or an acid, such as for example, nitric acid, hydrochloric acid, or sulfuric acid, among others, until reaching a pH value within the previously defined range. The pH can be determined by means of a pH-meter.

Preferably, the temperature of the aqueous matrix must be between 5 and 95°C, more preferably between 15 and 35°C, even more preferably between 20 and 30°C, most preferably about 25°C. If the temperature of the aqueous matrix is lower, in the conditioning step the temperature can be increased by heating the aqueous matrix until reaching a temperature within the defined range. If the temperature of the aqueous matrix is higher, in the conditioning step for conditioning the aqueous matrix the temperature can be reduced by cooling the aqueous matrix until reaching a temperature within the defined range. The temperature can be measured by means of a thermometer.

In a preferred embodiment, the aqueous matrix is conditioned such that:
- the pH is in the range of 3 to 10, and/or
- the temperature is in the range of 15 to 35°C.

In a particular embodiment, the aqueous matrix is conditioned such that:
- the pH is in the range of 5 to 9, and/or
- the temperature is in the range of 20 to 30°C.

The following step, step b), is the addition of magnetic iron mineral particles to the aqueous matrix provided in step a) to form microplastic/magnetic iron mineral particle aggregates.

The term "magnetic iron mineral" refers to any solid substance of natural origin (or its synthetic equivalent), of an inorganic nature, with a defined chemical composition, with an ordered spatial arrangement of atoms, comprising at least one iron species and having ferromagnetic properties, i.e., it is attracted by a magnet. As is known to one skilled in the art, minerals have a defined crystalline structure. In this sense, as is known to one skilled in the art, the ordered spatial arrangement of atoms refers to crystalline, i.e., non-amorphous compounds. The term magnetic iron mineral does not include iron particles with coatings, but rather refers to the magnetic mineral particles *per se*. Preferably, the magnetic iron mineral has a magnetic saturation between 5 and 100 emu g⁻¹ (between 5·10³ and 10⁵ A m⁻¹), more preferably between 30 and 90 emu g⁻¹ (between 30·10³ and 90·10³ A m⁻¹), even more preferably between 65 and 90 emu g⁻¹ (between 65·10³ and 90·10³ A m⁻¹), most preferably between 70 and 90 emu g⁻¹ (between 70·10³ and 90·10³ A m⁻¹). The magnetic properties of the magnetic iron mineral can be determined using a magnetometer with a SQUID (superconducting quantum interference device) sensor. The magnetization (M) of the magnetic iron mineral is measured depending on the external magnetic field applied (H) in the range of -10000 to 10000 Oe (which is equivalent to -797700 to 797700 A m⁻¹) at room temperature. The magnetic saturation value of the mineral is that value of M reached when any subsequent increase in H does not cause an increase in the magnetization of the mineral. Preferably, the iron mineral has an iron content of at least 50% by weight with respect to the total weight of the mineral, preferably at least 55% by weight, more preferably at least 60% by weight, even more preferably at least 65% by weight. The percentage of iron can be determined using a total reflection x-ray fluorescence (TXRF) spectrometer using the method described in the examples.

Preferably the magnetic iron mineral comprises an iron species selected from the group consisting of Fe(II), Fe(III), metallic Fe, and a mixture thereof. Examples of magnetic iron minerals are magnetite (formed by ferrous-diferric oxide FeO·Fe₂O₃, sometimes formulated as Fe₃O₄), maghemite (γ-Fe₂O₃), ilmenite (FeTiO₃), and the pyrrhotite (Fe_{0.8-1}S), among others. In a preferred embodiment, the magnetic iron mineral is magnetite.

The use of magnetic iron minerals, particularly magnetite, is advantageous from the economic and environmental viewpoint because they are materials that are abundant, environmentally-friendly, and readily separated from the aqueous matrices.

The magnetic iron mineral is in the form of particles. The term "particle" refers to the magnetic iron mineral being in the form of powder or granules the average diameter of which is comprised between 0.1 µm and 500 µm, preferably between 0.1 µm and 250 µm, preferably between 0.1 µm and 100 µm, preferably between 50 µm and 100 µm, preferably between 0.1 µm and 50 µm, more preferably between 0.1 µm and 25 µm, more preferably between 0.1 µm and 10 µm, even more preferably between 0.1 µm and 5 µm, even more preferably between 0.1 µm and 1 µm, even more preferably between 0.1 µm and 0.5 µm, most preferably between 0.1 µm and 0.3 µm. The magnetic iron mineral particles can be obtained by means of grinding the mineral and later sieving in the size ranges described above. The size of the magnetic iron mineral particles refers to the average diameter of said particles. This size was established by means of sieving for average particle diameters greater than 50 µm, whereas for smaller sizes light microscopy, scanning electron microscopy, and laser diffraction techniques were used, as described in the materials and methods section of the examples.

In another particular embodiment, the magnetic iron mineral particles have an average diameter comprised between 0.1 µm and 500 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 250 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 100 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 100 µm, and the microplastic has an average diameter of 50 µm to 100 µm.

In another particular embodiment, the magnetic iron mineral particles have an average diameter comprised between 50 µm and 100 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 50 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 25 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 10 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 5 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 1 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 0.5 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

In another particular embodiment, the magnetic iron mineral particles have an average diameter comprised between 0.1 µm and 0.3 µm, and the microplastic has an average diameter comprised in the range of 0.1 µm to 5 mm, more preferably in the range of 0.1 µm to 1 mm, even more preferably in the range of 0.1 µm to 500 µm, even more preferably 100 µm to 250 µm, even more preferably 50 µm to 100 µm.

The terms "microplastic/magnetic iron mineral particle aggregates", "microplastic/magnetic iron mineral aggregates", or "aggregates" refer to a cluster of particles formed by the microplastics and the magnetic iron mineral particles due to the interaction occurring between them.

The magnetic iron mineral particles can be added to the aqueous matrix in a continuous manner if the process is performed continuously or in a discontinuous manner if it is performed discontinuously (or in batches).

In a particular embodiment, the process of the invention is performed discontinuously, i.e., in batches.

In another particular embodiment, the process of the invention is performed continuously.

In a preferred embodiment, the amount of magnetic iron mineral particles (by weight) added to the aqueous matrix in step b) is 0.1 to 20 the amount of microplastics (by weight) present in the aqueous matrix provided in step a), more preferably from 0.5 to 10, even more preferably from 1 to 10, most preferably from 2 to 7. To determine the amount of magnetic iron mineral to be added, an aliquot of the aqueous matrix can be taken and the amount of microplastics contained therein determined. This involves the prior separation of the microplastics from the aqueous matrix by means of vacuum filtration using a microporous membrane filter with a pore size of not more than 0.1 µm, and the subsequent drying thereof either at room temperature or in a drying oven at a temperature of not more than 100°C. Then the filter containing the microplastics is weighed on a precision scale and the mass thereof is determined by the difference in weight with the same filter before performing the process of separating the microplastics.

In a preferred embodiment, the mixture obtained in step b) is subjected to stirring before performing step c). Stirring favors the interaction of the microplastics and magnetic iron mineral particles to form the aggregates. Stirring can be performed by means of any conventional method known to one skilled in the art, such as, for example, mechanical, magnetic, or electrostatic stirring, and more preferably, mechanical stirring.

The process of the present invention is particularly advantageous with respect to other processes of the state of the art due to the significant reduction in time needed to achieve separation. As shown in the examples, the separation is virtually immediate, a contact time between the microplastic and the magnetic iron mineral particles of less than 1 min being necessary. Therefore, in a particular embodiment, the mixture obtained in step b) is kept in contact, preferably under stirring, for a time from 15 seconds to 2 min, more preferably from 15 seconds to 1 minute, most preferably about 30 seconds.

Once the aggregates are formed, they are separated from the aqueous matrix in step c) by means of applying a magnetic field.

Said magnetic field can be generated with a magnet or electromagnet, preferably by means of a magnet.

The process of the present invention has the additional advantage of the simplicity of the required equipment and the viability of its scaling up for the treatment of large volumes of water.

Once the aggregates are separated from the aqueous matrix, the magnetic iron mineral particles can be recovered from said aggregates and reused in the process according to the invention. Therefore, in a preferred embodiment the magnetic iron mineral particles forming aggregates with the microplastics separated in step c) are recovered so as to be reused. In a more preferred embodiment, the magnetic particles are recovered by means of heat treatment performed on the aggregates. Said heat treatment can be carried out by means of any method known to one skilled in the art, although recovery is preferably achieved by means of combustion in an air atmosphere by heating the microplastics contained in the aggregates. To that end, the microplastic/magnetic iron mineral aggregate is heated to a temperature comprised between 250 and 600°C, preferably to a temperature comprised between 300 and 500°C. Particularly, heating is performed at a rate comprised between 0.5 and 20°C min⁻¹, more preferably at a rate of about 5°C min⁻¹. In a particular embodiment, it is heated to a temperature comprised between 250 and 600°C at a rate comprised between 0.5 and 20°C min⁻¹, preferably at about 5°C min⁻¹. In another particular embodiment, it is heated to a temperature comprised between 300 and 500°C at a rate comprised between 0.5 and 20°C min⁻¹, preferably at about 5°C min⁻¹. Generally, the heating onset temperature is room temperature (20-25°C). Preferably, the heating is performed by means of a thermal cycle.

The process of the present invention can be used in the treatment of water, particularly in the treatment of high flow rates of water, these flow rates being understood as being comprised between 500 and 4,000,0000 m³·day⁻¹, preferably between 500 and 500,000 m³·day⁻¹. Therefore, another aspect of the invention relates to the use of the process for separating microplastics defined in the first aspect in the water treatment process, particularly water purification. The steps of the process are the same as those defined in the first aspect, wherein the water to be treated corresponds with the aqueous matrix defined in the process of the first aspect.

The process of the present invention can also be used as an analytical method for the quantification of microplastics in aqueous matrices. Therefore, another aspect of the invention relates to the use of the process for separating microplastics defined in the first aspect in the quantification of microplastics in aqueous matrices. Particularly, said method of quantification comprises the steps of: i) adding a known amount of magnetic mineral particles to the aqueous matrix containing an unknown concentration of microplastics, ii) stirring the suspension to achieve the interaction of the microplastics present in the aqueous matrix with the magnetic mineral particles, iii) separating the generated magnetic aggregates from the aqueous matrix by means of using a magnet or magnetic field, iv) drying the aggregates, v) quantifying the generated magnetic aggregates by the difference in weight with respect to the mass of magnetic mineral added to the matrix, vi) thoroughly analyzing the aggregates by means of advanced techniques for excluding from the mass other materials that are not microplastics.

The term "about" must be interpreted as the value referred to ±10% of said value, preferably ±5% of said value.

Moreover, the magnetic iron minerals are susceptible to being used as catalysts in advanced oxidation processes for degrading a wide range of organic compounds (Munoz, M. et al., Applied Catalysis B: Environmental, 203 (2017) 106-173; Munoz, M. et al., Catalysis Today, 313 (2018) 142-147). Therefore, the magnetic iron minerals can catalyze degradation of the microplastics contained in the microplastic/magnetic iron mineral aggregates in an advanced oxidation process. Namely, the advanced oxidation process could be a Fenton-type process and its derivatives are sono-Fenton, photo-Fenton, or electro-Fenton.

Illustrative examples disclosing the features and advantages of the invention are described below; however, they must not be interpreted as being limiting of the object of the invention such as it is defined in the claims.

### Examples

### Materials and methods

### Determination of the microplastic particle size

In the present invention, the microplastics were added to the aqueous matrices to subsequently carry out their magnetic separation by means of the process described in the specification. The particle size range of the microplastics was previously determined by means of sieving same using sieves of different sizes (5 mm, 1 mm, 500 µm, 250 µm, 100 µm, 50 µm, and 20 µm).

Measuring the size of microplastics in real aqueous matrices involves the prior separation thereof from the aqueous matrix by means of vacuum filtration using a microporous membrane filter with a pore size of not more than 0.1 µm, and the subsequent drying thereof either at room temperature or in a drying oven at a temperature of not more than 100°C. The filter containing the microplastics is then analyzed by means of light microscopy. In this case, a Nikon Eclipse Ci-S/Ci-L upright light microscope equipped with a DS-Fi2 digital camera and a DS-U3 control unit, with software for measuring and processing images (NIS-Elements L imaging) was used. The length and width of the microplastics are measured, and they are assigned the size of the largest dimension (length).

### Determination of the magnetic mineral particle size

In the present invention, the magnetic mineral particle size was established by means of sieving for average particle diameters greater than 50 µm, whereas for smaller sizes light microscopy, scanning electron microscopy, and laser diffraction techniques were used.

The scanning electron microscope used to determine the size of the magnetic mineral particles was a JEOL brand JSM 6335F model microscope. A voltage of 5 kV was used, and work was performed with a maximum amplification of 10,000x. The mineral particles were previously scattered on a sample holder coated with carbon which included an adhesive to immobilize the solid particles. The length and width of the mineral particles were measured, and they were assigned the size of the largest dimension (length).

X-ray diffraction analyses were carried out using a Mastersizer 3000 particle size analyzer supplied by Malvern Panaltycal. Prior to the analysis, the magnetic mineral sample was dispersed in water, with the final suspension having a solid concentration of 0.1% by mass. The sample measurement time with light was 10 s.

### Determination of the percentage of iron

The iron content of the magnetic iron mineral was determined using a total reflection x-ray fluorescence (TXRF) spectrometer, namely the S2 Picofox (Bruker) model, with a molybdenum source. The method of preparation of the sample consisted of the open vessel digestion thereof using a solution of hydrochloric acid, nitric acid, and hydrofluoric acid at a proportion by volume of 6:2:0.5, at 105°C for 1.5 h. The concentration of mineral in the vessel was 1000 mg L⁻¹ and a total volume of 10 mL was used. If necessary, the magnetic iron mineral was previously ground to a size smaller than 100 µm. Once the mineral sample was digested, an internal gallium standard was added in the solution for later quantification. A 3-µL aliquot of the resulting solution was introduced in the spectrometer for analysis, which was performed at 50 kV and 600 µA with an acquisition time of 500 s. The integration of the peak corresponding to the iron in the obtained spectrogram allowed determining the percentage of iron by weight contained in the mineral.

### X-ray diffraction

Powder x-ray diffraction (PXRD) was used to perform the identification and characterization of the crystalline phases present in the magnetic iron mineral. The samples were analyzed in an X'Pert PRO theta/theta diffractometer by Panalytical with a Cu tube (Kα radiation, 8.04 keV). The diffractometer has a secondary graphite monochromator and a Xe gas detector. A theta/2theta scan was performed with a 2θ range of 10 to 80°, an angular increment of 0.04° and an accumulation time of 4s. Prior to their analysis, the magnetic iron mineral particles were ground, if necessary, to a size smaller than 100 µm. For the identification of the crystalline phases present in the obtained diffractograms, the High Score Plus software and the ICDD (International Centre for Diffraction Data) PDF-4 Full File crystallographic database were used.

### Determination of magnetic saturation

The magnetic properties of the magnetic iron mineral were measured using a Quantum Design MPMS XL-5 magnetometer with a SQUID (superconducting quantum interference devices) sensor. If necessary, the magnetic iron mineral was previously ground to a size smaller than 100 µm. The magnetic moment (M) of the magnetic iron mineral was measured depending on the applied external magnetizing field (H) in the range of -10000 to 10000 Oe (equivalent to -797700 to 797700 A m⁻¹ in the SI) at room temperature. The magnetic saturation value is that value of M that is reached when any subsequent increase in H does not cause increase in the magnetization of the material.

### Example 1. Separation of polystyrene microplastics (Type 6, PS) of a wide range of particle sizes from different aqueous matrices under different operating conditions.

Separation experiments were performed for separating polystyrene microplastics of a different particle size using aqueous matrices in which the salinity and the temperature varied. The process of separation used was performed using a magnetic iron mineral, i.e., ground magnetite (in the range of 50 to 100 µm). The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polystyrene microplastics, and the magnetic iron mineral particles were introduced. Both the polystyrene microplastics and the magnetic iron mineral particles remained in suspension in the aqueous matrices. The size of the polystyrene microplastics used varied in the range of 1 µm to 500 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a polystyrene microplastic amount of 10 mg were used. 20 mg of magnetite particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 1 includes the studied magnetite and microplastic size ranges, the added amounts of magnetite and microplastics, the tested operating conditions, and the results obtained in the separation.

**Table 1**

| PS microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| <100 | 10 | 50 - 100 | 20 | 0.1 | 25 | ≥99.0 |
| 100 - 250 | | | | | | ≥99.9 |
| 250-500 | | | | | | ≥99.9 |
| <100 | | | | 35 | | ≥99.0 |
| 100 - 250 | | | | | | ≥99.0 |
| 250-500 | | | | | | ≥99.0 |
| 100 - 250 | | | | 0.1 | 75 | ≥99.9 |

Figure 1 shows a photograph of the suspension of polystyrene microplastics in salt water (1.A), a photograph of the suspension of polystyrene microplastics and magnetite particles in salt water (1.B), a photograph of the suspension of polystyrene microplastics and magnetite particles in salt water under the influence of a magnet (1.C), and a photograph of the same suspension in salt water once the magnet is removed (1.D). Figure 2 also includes the obtained results relative to the amount of polystyrene microplastics added to the aqueous matrix and the amount of said microplastics separated as a result of the interaction with the magnetite particles.

As can be observed, the separation of the polystyrene microplastics was highly effective regardless of their size, with recovery values by mass of more than 99.0% being achieved. It should be pointed out that no differences were observed in the recovery values of the microplastics when the temperature or the salt concentration of the aqueous matrix was varied.

Regardless of the temperature, pH value, or salt concentration of the aqueous matrix, leaching of iron during the test was negligible (<0.1 mg L⁻¹).

### Example 2. Separation of high-density polyethylene microplastics (Type 2, HDPE) of a wide range of particle sizes from different aqueous matrices under different operating conditions.

Separation experiments were performed for separating high-density polyethylene microplastics of a different particle size using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the high-density polyethylene microplastics, and the magnetic iron mineral particles were introduced. Both the high-density polyethylene microplastics and the magnetic iron mineral particles remained in suspension in the aqueous matrices. The size of the high-density polyethylene microplastics used varied in the range of 1 µm to 500 µm in the different experiments, as indicated in Table 2. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a high-density polyethylene microplastic amount of 10 mg were used. 70 mg of magnetite particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 2 includes the studied magnetite and microplastic size ranges, the added amounts of magnetite and microplastics, the tested operating conditions, and the results obtained in the separation.

**Table 2**

| HDPE microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| <100 | 10 | 50 - 100 | 70 | 0.1 | 25 | ≥95.0 |
| 100 - 250 | | | | | | ≥99.0 |
| 250-500 | | | | | | ≥99.9 |
| <100 | | | | 35 | | ≥95.0 |
| 100 - 250 | | | | | | ≥99.0 |
| 250-500 | | | | | | ≥99.0 |

Figure 3 shows a photograph of the suspension of high-density polyethylene microplastics in salt water (3.A), a photograph of the suspension of high-density polyethylene microplastics and magnetite particles in salt water (3.B), a photograph of the suspension of high-density polyethylene microplastics and magnetite particles in salt water under the influence of a magnet (3.C), and a photograph of the same suspension in salt water once the magnet is removed (3.D). Figure 4 also includes the obtained results relative to the amount of high-density polyethylene microplastics added to the aqueous matrix and the amount of said microplastics separated as a result of the interaction with the magnetite particles.

As can be observed, the separation of the high-density polyethylene microplastics was highly effective regardless of their size, with recovery values by mass greater than 95% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 3. Separation of polyethylene terephthalate microplastics (Type 1, PET) from different aqueous matrices.

Separation experiments were performed for separating polyethylene terephthalate microplastics using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹). The separation experiments were carried out in glass vials in which the aqueous matrix, the polyethylene terephthalate microplastics, and the magnetic iron mineral particles were introduced. Both the polyethylene terephthalate microplastics and the magnetic iron mineral particles remained in suspension in the aqueous matrices. The size of the polyethylene terephthalate microplastics used was in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a polyethylene terephthalate microplastic amount of 10 mg were used. 20 mg of magnetic iron mineral particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 3 includes the studied magnetite and microplastic size ranges, the added amounts of magnetite and microplastics, the tested operating conditions, and the results obtained in the separation.

**Table 3**

| PET microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 20 | 0.1 | 25 | ≥99.0 |
| | | | | 35 | | ≥99.0 |

Figure 5 shows a photograph of the suspension of polyethylene terephthalate microplastics in salt water (5.A), a photograph of the suspension of polyethylene terephthalate microplastics and magnetite particles in salt water (5.B), a photograph of the suspension of polyethylene terephthalate microplastics and magnetite particles in salt water under the influence of a magnet (5.C), and the obtained results relative to the amount of polyethylene terephthalate microplastics added to the aqueous matrix and the amount of said microplastics separated as a result of the interaction with the magnetite particles (5.D).

As can be observed, the separation of the polyethylene terephthalate microplastics was highly effective, with recovery values by mass of 99.0% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 4. Separation of polyvinyl chloride microplastics (Type 3, PVC) from different aqueous matrices.

Separation experiments were performed for separating polyvinyl chloride microplastics using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polyvinyl chloride microplastics, and the magnetic iron mineral particles were introduced. Both the polyvinyl chloride microplastics and the magnetic iron mineral particles remained in suspension in the aqueous matrices. The size of polyvinyl chloride microplastics used varied in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and polyvinyl chloride microplastic amount of 10 mg were used. 20 mg of magnetic iron mineral particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 4 includes the studied magnetite and microplastic size ranges, the added amounts of magnetite and microplastics, the tested operating conditions, and the results obtained in the separation.

**Table 4**

| PVC microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 20 | 0.1 | 25 | ≥99.0 |
| | | | | 35 | | ≥99.0 |

Figure 6 shows a photograph of the suspension of polyvinyl chloride microplastics in salt water 6.A), a photograph of the suspension of polyvinyl chloride microplastics and magnetite in salt water (6.B), a photograph of the suspension of polyvinyl chloride microplastics and magnetite in salt water under the influence of a magnet (6.C), and the obtained results relative to the amount of polyvinyl chloride microplastics added to the aqueous matrix and the amount of said microplastics separated as a result of the interaction with the magnetite particles (6.D).

As can be observed, the separation of the polyvinyl chloride microplastics was highly effective, with recovery values by mass of 99.0% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 5. Separation of low-density polyethylene microplastics (Type 4, LDPE) from different aqueous matrices.

Separation experiments were performed for separating low-density polyethylene microplastics using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the low-density polyethylene microplastics, and the magnetic iron mineral particles were introduced. Both the low-density polyethylene microplastics and the magnetic iron mineral particles remained in suspension in the aqueous matrices. The size of the low-density polyethylene microplastics used varied in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was 25°C. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a low-density polyethylene microplastic amount of 10 mg were used. 20 mg of magnetic iron mineral particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 5 includes the studied magnetite and microplastic size ranges, the added amounts of magnetite and microplastics, the tested operating conditions, and the results obtained in the separation.

**Table 5**

| LDPE microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 20 | 0.1 | 25 | ≥99.0 |
| | | | | 35 | | ≥99.0 |

Figure 7 shows a photograph of the suspension of low-density polyethylene microplastics in salt water (7.A), a photograph of the suspension of low-density polyethylene microplastics and magnetite particles in salt water (7.B), a photograph of the suspension of low-density polyethylene microplastics and magnetite particles in salt water under the influence of a magnet (7.C), and the obtained results relative to the amount of low-density polyethylene microplastics added to the aqueous matrix and the amount of said microplastics separated as a result of the interaction with the magnetite particles (7.D).

As can be observed, the separation of the low-density polyethylene microplastics was highly effective, with recovery values by mass of 99.0% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 6. Separation of polypropylene microplastics (Type 5, PP) from different aqueous matrices.

Separation experiments were performed for separating polypropylene microplastics using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polypropylene microplastics, and the magnetic iron mineral particles were introduced. Both the polypropylene microplastics and the magnetic iron mineral particles remained in suspension in the aqueous matrices. The size of polypropylene microplastics used varied in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a polypropylene microplastic amount of 10 mg were used. 30 mg of magnetic iron mineral particles were added to said suspension. Mechanical stirring of the suspension was then performed using a paddle stirrer for 30 s. Lastly, the separation of microplastic/magnetic iron mineral aggregates was performed by means of applying a magnetic field generated with a magnet. Table 6 includes the studied magnetite and microplastic size ranges, the added amounts of magnetite and microplastics, the tested operating conditions, and the results obtained in the separation.

**Table 6**

| PP microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 30 | 0.1 | 25 | ≥99.9 |
| | | | | 35 | | ≥99.9 |

Figure 8 shows a photograph of the suspension of polypropylene microplastics in salt water (8.A), a photograph of the suspension of polypropylene microplastics and magnetite particles in salt water (8.B), a photograph of the suspension of polypropylene microplastics and magnetite particles in salt water under the influence of a magnet (8.C), and the obtained results relative to the amount of polypropylene microplastics added to the aqueous matrix and the amount of said microplastics separated as a result of the interaction with the magnetite particles (8.D).

As can be observed, the separation of the polypropylene microplastics was highly effective, with recovery values by mass of more than 99.9% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 7. Separation of a mixture of microplastics containing polystyrene (Type 6), high-density polyethylene (Type 2), polyethylene terephthalate (Type 1), polyvinyl chloride (Type 3), low-density polyethylene (Type 4), and polypropylene (Type 5) from different aqueous matrices.

Separation experiments were performed for separating a mixture of microplastics containing polystyrene, high-density polyethylene, polyethylene terephthalate, polyvinyl chloride, low-density polyethylene, and polypropylene using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the mixture of the previously mentioned microplastics, and the magnetic iron mineral particles were introduced. Both the microplastics and the magnetic iron mineral particles remained in suspension in the aqueous matrices. The size of the microplastics used varied in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a total microplastic amount of 10 mg were used, with the same amount by mass of each of the six previously mentioned microplastics being used. 30 mg of magnetic iron mineral particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet. Table 7 includes the studied magnetite and microplastic size ranges, the added amounts of magnetite and microplastics, the tested operating conditions, and the results obtained in the separation.

**Table 7**

| Mixture of microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 (1,7 mg of each MP) | 50 - 100 | 30 | 0.1 | 25 | ≥99.0 |
| | | | | 35 | | ≥99.0 |

Figure 9 shows a photograph of the suspension of the mixture of polyethylene terephthalate, high-density polyethylene, polyvinyl chloride, low-density polyethylene, polypropylene, and polystyrene microplastics in salt water (9.A), a photograph of the suspension of the same mixture of microplastics and magnetite particles in salt water (9.B), a photograph of the suspension of the same mixture of microplastics in salt water and magnetite particles in salt water under the influence of a magnet (9.C), and the obtained results relative to the amount of microplastics added to the aqueous matrix and the amount of said microplastics separated as a result of the interaction with the magnetite particles (9.D).

As can be observed, the separation of the mixture of microplastics was highly effective, with recovery values by mass of 99.0% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 8. Separation of microplastics of a different nature with respect to the aforementioned microplastics (Type 7, polycarbonate (PC) and polyurethane (PU)).

Separation experiments were performed for separating microplastics of a different nature with respect to the aforementioned microplastics shown in Examples 1 to 7, namely polycarbonate and polyurethane microplastics, using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polycarbonate or polyurethane microplastics, and the magnetic iron mineral particles were introduced. Both the microplastics and the magnetic iron mineral particles remained in suspension in the aqueous matrices. The size of the microplastics used varied in the range of 100 to 250 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g L⁻¹. All the experiments were performed in triplicate.

An aqueous matrix volume of 10 mL and a polycarbonate or polyurethane microplastic amount of 10 mg were used. 20 mg of magnetic iron mineral particles were added to said suspension. Mechanical stirring of the suspension was then performed using a paddle stirrer for 30 s. Lastly, the separation of the microplastic/magnetic iron mineral aggregates was performed by means of applying a magnetic field generated with a magnet.

Table 8 includes the magnetite and polycarbonate microplastic size ranges, the added amounts of magnetite and polycarbonate microplastics, the tested operating conditions, and the results obtained in the separation.

**Table 8**

| PC microplastics | | Magnetite | | Salinity (g L⁻¹ NaCI) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 20 | 0.1 | 25 | ≥99.0 |
| | | | | 35 | | ≥99.0 |

Figure 10 shows a photograph of the suspension of polycarbonate microplastics in salt water (10.A), a photograph of the suspension of polycarbonate microplastics and magnetite particles in salt water (10.B), a photograph of the suspension of polycarbonate microplastics and magnetite particles in salt water under the influence of a magnet (10.C), and the obtained results relative to the amount of polycarbonate microplastics added to the aqueous matrix and the amount of said microplastics separated as a result of the interaction with the magnetite particles (10.D).

Table 9 includes the magnetite and polyurethane microplastic size ranges, the added amounts of magnetite and polyurethane microplastics, the tested operating conditions, and the results obtained in the separation.

**Table 9**

| PU microplastics | | Magnetite | | Salinity (g L⁻¹ NaCl) | Temp. (°C) | Separation yield (%) |
|---|---|---|---|---|---|---|
| Size (µm) | Amount (mg) | Size (µm) | Amount (mg) | | | |
| 100 - 250 | 10 | 50 - 100 | 20 | 0.1 | 25 | ≥99.0 |
| | | | | 35 | | ≥99.0 |

Figure 11 shows a photograph of the suspension of polyurethane microplastics in salt water (11.A), a photograph of the suspension of polyurethane microplastics and magnetite in salt water (11.B), a photograph of the saline suspension of polyurethane microplastics and magnetite particles under the influence of a magnet (11.C), and the obtained results relative to the amount of polyurethane microplastics added to the aqueous matrix and the amount of said microplastics separated as a result of the interaction with the magnetite particles (11.D).

As can be observed, the separation of both the polycarbonate and polyurethane microplastics was highly effective, with recovery values by mass greater than 99.0% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 9. Separation of polyester microplastics (polyester fibers of a textile origin) from different aqueous matrices.

Separation experiments were performed for separating polyester fibers using aqueous matrices in which salinity was varied. The process of separation used was performed using a magnetic iron mineral, i.e., ground magnetite (in the range of 50 to 100 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polyester fibers, and the magnetic iron mineral particles were introduced. Both the polyester fibers and the magnetic iron mineral particles remained in suspension in the aqueous matrices. The mean length of the polyester fibers, obtained from a textile material with a 100% polyester composition, was found to be between 1000 and 1200 µm, and the width between 10 and 15 µm. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g-L⁻¹. All the experiments were performed in triplicate.

An aqueous matrix volume of 10 mL and a polyester fiber amount of 10 mg were used. 20 mg of magnetic iron mineral particles were added to said suspension. Mechanical stirring of the suspension was then performed using a paddle stirrer for 30 s. Lastly, the separation of microplastic/magnetic iron mineral aggregates was performed by means of applying a magnetic field generated with a magnet. Table 10 includes the studied magnetite and microplastic size ranges, the added amounts of magnetite and microplastics, the tested operating conditions, and the results obtained in the separation.

**Table 10**

| Polyester fibers | | Magnetite | | Salinity (g L⁻¹ NaCl) | Temp. (°C) | Separation yield (%) |
|---|---|---|---|---|---|---|
| Width (µm) | Amount (mg) | Size (µm) | Amount (mg) | | | |
| 10 - 15 | 10 | 50 - 100 | 20 | 0.1 | 25 | ≥99.9 |
| | | | | 35 | | ≥99.9 |

Figure 12 shows a photograph of the suspension of polyester fibers in salt water (12.A), a photograph of the suspension of polyester fibers and magnetite particles in salt water (12.B), a photograph of the suspension of polyester fibers and magnetite particles in salt water under the influence of a magnet (12.C), and the obtained results relative to the amount of polyester fibers added to the aqueous matrix and the amount of said polyester fibers separated as a result of the interaction with the magnetite particles (12.D).

As can be observed, the separation of the polyester fibers was highly effective, with recovery values by mass of more than 99.9% being achieved. It should be pointed out that no differences were observed in the recovery values of the microplastics when the salt concentration of the aqueous matrix was varied.

Regardless of the temperature, pH value, or salt concentration of the aqueous matrix, leaching of iron during the test was negligible (<0.1 mg-L⁻¹).

### Example 10. Separation of polystyrene microplastics from different aqueous matrices using medium-sized magnetite particles (250 - 500 µm)

Separation experiments were performed for separating polystyrene microplastics using aqueous matrices in which salinity was varied. The process of separation used was performed using a magnetic iron mineral, i.e., ground magnetite (in the range of 250 to 500 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polystyrene microplastics, and the magnetic iron mineral particles were introduced. Both the polystyrene microplastics and the magnetic iron mineral particles remained in suspension in the aqueous matrices. The size of the microplastics used varied in the range of 50 to 100 µm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). Salinity was varied using different sodium chloride concentrations in the range of 0.1 to 35 g·L⁻¹. All the experiments were performed in triplicate.

An aqueous matrix volume of 10 mL and a polystyrene microplastic amount of 10 mg were used. 20 mg of magnetic iron mineral particles were added to said suspension. Mechanical stirring of the suspension was then performed using a paddle stirrer for 30 s. Lastly, the separation of microplastic/magnetic iron mineral aggregates was performed by means of applying a magnetic field generated with a magnet. Table 11 includes the studied magnetite and microplastic size ranges, the added amounts of magnetite and microplastics, the tested operating conditions, and the results obtained in the separation.

**Table 11**

| PS microplastics | | Magnetite | | Salinity (g L⁻¹ NaCl) | Temp. (°C) | Separation yield (%) |
|---|---|---|---|---|---|---|
| Size (µm) | Amount (mg) | Size (µm) | Amount (mg) | | | |
| 50 - 100 | 10 | 250-500 | 20 | 0.1 | 25 | 76.0 |
| | | | | 35 | | 74.0 |

As can be observed, the separation of the microplastics was effective, with recovery values by mass greater than 70% being achieved. It should be pointed out that no significant differences were observed in the recovery values of the microplastics when the salt concentration of the aqueous matrix was varied.

Regardless of the temperature, pH value, or salt concentration of the aqueous matrix, leaching of iron during the test was negligible (<0.1 mg L⁻¹).

### Example 11. Effect of magnetite particle size on the polystyrene microplastic separation yield.

Separation experiments were performed for separating polystyrene microplastics using an aqueous matrix with a salinity of 0.1 g-L⁻¹ of sodium chloride. The process of separation used was performed using a magnetic iron mineral, i.e., ground magnetite, in different average diameter ranges (0.2 µm and <25 µm), as described in detail in the description of the invention. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, polystyrene microplastics, and magnetite particles were introduced. Both the polystyrene microplastics and the magnetite particles remained in suspension in the aqueous matrices. The size of the polystyrene microplastics used varied in the range of 50 µm to 5 mm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). All the experiments were performed in triplicate.

An aqueous matrix volume of 10 mL and a polystyrene microplastic amount of 10 mg were used. 20 mg of magnetite particles were added to said suspension. Mechanical stirring of the suspension was then performed using a paddle stirrer for 30 s. Lastly, the separation of microplastic/magnetite aggregates was performed by means of applying a magnetic field generated with a magnet. Table 12 includes the studied magnetite and microplastic size ranges, as well as the added amounts of magnetite and microplastics, the tested operating conditions, and the results obtained in the separation.

**Table 12**

| Magnetite | | PS microplastics | | Temp. (°C) | Separation yield (%) |
|---|---|---|---|---|---|
| Size (µm) | Amount (mg) | Size (µm) | Amount (mg) | | |
| 0.2 | 20 | 50 - 100 | 10 | 25 | ≥99.9 |
| | | 250 - 500 | | | ≥99.9 |
| | | 500 - 1000 | | | ≥99.7 |
| | | 1000 - 5000 | | | ≥99.9 |
| <25 | 20 | 50 - 100 | 10 | 25 | 99.3 |
| | | 250 - 500 | | | 99.1 |
| | | 500 - 1000 | | | 99.0 |
| | | 1000 - 5000 | | | 99.0 |

As can be observed, the separation of polystyrene microplastics was highly effective regardless of their size when magnetite particles with an average diameter of 0.2 µm or less than 25 µm were used, with recovery values by mass of more than 99% being achieved.

Leaching of iron during all the tests performed for separating the microplastics was negligible (<0.1 mg-L⁻¹).

### Comparative example 12. Separation of polystyrene microplastics from different aqueous matrices using large-sized magnetite particles (1 - 5 mm)

Separation experiments were performed for separating polystyrene microplastics using an aqueous matrix with a salinity of 0.1 g·L⁻¹ of sodium chloride. The process of separation used was performed using a magnetic iron mineral, i.e., ground magnetite (in the range of 1000 to 5000 µm). The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polystyrene microplastics, and the magnetite particles were introduced. Both the polystyrene microplastics and the magnetite particles remained in suspension in the aqueous matrices. The size of the polystyrene microplastics used varied in the range of 50 µm to 5 mm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). All the experiments were performed in triplicate.

An aqueous matrix volume of 10 mL and a polystyrene microplastic amount of 10 mg were used. 20 mg of magnetite particles were added to said suspension. Mechanical stirring of the suspension was then performed using a paddle stirrer for 30 s. Lastly, the separation of microplastic/magnetite aggregates was performed by means of applying a magnetic field generated with a magnet. Table 13 includes the studied magnetite and microplastic size ranges, as well as the added amounts of magnetite and microplastics, the tested operating conditions, and the results obtained in the separation.

**Table 13**

| Magnetite | | PS microplastics | | Temp. (°C) | Separation yield (%) |
|---|---|---|---|---|---|
| Size (µm) | Amount (mg) | Size (µm) | Amount (mg) | | |
| 1000 - 5000 | 20 | 50 - 100 | 10 | 25 | 20.0 |
| | | 250 - 500 | | | 1.0 |
| | | 500 - 1000 | | | 0.7 |
| | | 1000 - 5000 | | | 0.3 |

As can be observed, the separation of polystyrene microplastics was not effective when a magnetite size range comprised between 1000 and 5000 µm was used. Furthermore, the yield largely depended on the size of the microplastic. In that sense, the highest yield was obtained with the smallest size of microplastic used (50 - 100 µm), where a separation of 20% was achieved. In the remaining studied microplastic size ranges (250 - 500 µm, 500 - 1000 µm, and 1000 - 5000 µm), the separation yields were equal to or less than 1%.

Leaching of iron during all the tests performed for separating the microplastics was negligible (<0.1 mg-L⁻¹).

### Example 13. Effect of magnetite particle concentration on the polystyrene microplastics separation yield.

Separation experiments were performed for separating polystyrene microplastics using an aqueous matrix with a salinity of 0.1 g·L⁻¹ of sodium chloride. The process of separation used was performed using a magnetic iron mineral, i.e., ground magnetite, with an average particle size of 0.2 µm. The percentage of iron of the magnetite used is in the range of 68 - 78% by weight. X-ray diffraction analysis of the magnetite confirmed its crystalline nature, showing as a single phase the one corresponding to magnetite (Fe₃O₄). Magnetism analysis of this material gave a magnetic saturation value of 70 to 90 emu g⁻¹ (70·10³ to 90·10³ A m⁻¹).

The separation experiments were carried out in glass vials in which the aqueous matrix, the polystyrene microplastics, and the magnetite particles were introduced. Both the polystyrene microplastics and the magnetite particles remained in suspension in the aqueous matrices. The size of the polystyrene microplastics used varied in the range of 50 µm to 5 mm in the different experiments. The temperature, pH value, and salinity were measured using a thermometer, a pH-meter, and a conductivity meter, respectively. The conditioning of the aqueous matrix relative to temperature, pH value, and salinity was performed as a step prior to the separation experiments. In the experiments where it was so required, the temperature of the aqueous matrix was increased using a thermostatic bath. The pH value was adjusted to 7 using aqueous solutions of nitric acid (1 M) and sodium hydroxide (1 M). All the experiments were performed in triplicate.

An aqueous matrix volume of 10 mL and a polystyrene microplastic amount of 10 mg were used. Variable amounts of magnetite particles in the range of 1 to 20 mg were added to said suspension. Mechanical stirring of the suspension was then performed using a paddle stirrer for 30 s. Lastly, the separation of microplastic/magnetite aggregates was performed by means of applying a magnetic field generated with a magnet. Table 14 includes the studied magnetite size and microplastic size ranges, the added amounts of magnetite and microplastics, the tested operating conditions, and the results obtained in the separation.

**Table 14**

| Magnetite | | PS microplastics | | Temp. (°C) | Separation yield (%) |
|---|---|---|---|---|---|
| Size (µm) | Amount (mg) | Size (µm) | Amount (mg) | | |
| 0.2 | 20 | 50 - 100 | 10 | 25 | ≥99.9 |
| | | 100 - 250 | | | ≥99.9 |
| | | 250 - 500 | | | ≥99.9 |
| | | 500 - 1000 | | | ≥99.7 |
| | | 1000 - 5000 | | | ≥99.9 |
| 0.2 | 15 | 50 - 100 | 10 | 25 | ≥99.9 |
| | | 100 - 250 | | | ≥99.9 |
| | | 250 - 500 | | | ≥99.7 |
| | | 500 - 1000 | | | ≥99.7 |
| | | 1000 - 5000 | | | ≥99.7 |
| 0.2 | 10 | 50 - 100 | 10 | 25 | ≥99.5 |
| | | 100 - 250 | | | ≥99.5 |
| | | 250 - 500 | | | ≥99.0 |
| | | 500 - 1000 | | | ≥99.0 |
| | | 1000 - 5000 | | | ≥99.0 |
| 0.2 | 5 | 50 - 100 | 10 | 25 | ≥99.5 |
| | | 100 - 250 | | | ≥99.0 |
| | | 250 - 500 | | | ≥99.0 |
| | | 500 - 1000 | | | ≥98.8 |
| | | 1000 - 5000 | | | ≥98.7 |
| 0.2 | 1 | 50 - 100 | 10 | 25 | ≥99.3 |
| | | 100 - 250 | | | ≥99.0 |
| | | 250 - 500 | | | ≥99.0 |
| | | 500 - 1000 | | | ≥98.3 |
| | | 1000 - 5000 | | | ≥98.0 |

As can be observed, the separation of polystyrene microplastics was highly effective regardless of their size when amounts of magnetite particles with an average size of 0.2 µm in the range of 1 to 20 mg were used. The separation yields of polystyrene microplastics of all the studied sizes were above 99% when the amount of magnetite added was 10 mg (magnetite/microplastic ratio of 1) or higher. The lowest percentage of separation obtained was 98%, when an amount of magnetite of 1 mg was used for separating a microplastic size of 1000 to 5000 µm. In the microplastic sizes of less than 500 µm, the yield was always greater than 99% regardless of the amount of magnetite added in the studied intervals.

Leaching of iron during all the tests was negligible (<0.1 mg-L⁻¹).

## Claims

1. A process for separating microplastics from an aqueous matrix comprising microplastics, the process comprising:
a) providing an aqueous matrix comprising microplastics,
b) adding magnetic iron mineral particles the average diameter of which is comprised between 0.1 and 500 µm to the aqueous matrix provided in step a) to form microplastic/magnetic iron mineral particle aggregates, and
c) separating the microplastic/magnetic iron mineral particle aggregates from the mixture obtained in step b) by applying a magnetic field.

2. The process according to claim 1, wherein the magnetic iron mineral comprises an iron species selected from the group consisting of Fe(II), Fe(III), metallic Fe, and a mixture thereof.

3. The process according to any of claims 1 or 2, wherein the magnetic iron mineral is magnetite.

4. The process according to any of claims 1 to 3, wherein the average diameter of the magnetic iron mineral particles is comprised between 0.1 and 100 µm.

5. The process according to claim 4, wherein the average diameter of the magnetic iron mineral particles is comprised between 0.1 and 50 µm.

6. The process according to any of claims 1 to 5, wherein the weight of the magnetic iron mineral particles which is added to the aqueous matrix in step b) is 0.1 to 20 the weight of the microplastics present in the aqueous matrix provided in step a).

7. The process according to claim 6, wherein the weight of the magnetic iron mineral particles which is added to the aqueous matrix in step b) is 0.5 to 10 the weight of the microplastics present in the aqueous matrix provided in step a).

8. The process according to any of claims 1 to 7, wherein the average diameter of the microplastics is in the range of 0.1 µm to 5 mm.

9. The process according to claim 8, wherein the average diameter of the microplastics is in the range of 50 µm to 100 µm.

10. The process according to any of claims 1 to 9, wherein the microplastics are selected from the group consisting of polyethylene terephthalate, high-density polyethylene, polyvinyl chloride, low-density polyethylene, polypropylene, polystyrene, polycarbonate, polyurethane, polyester, and mixtures thereof.

11. The process according to any of claims 1 to 10, wherein the addition of the magnetic iron mineral particles to the aqueous matrix comprising microplastics of step b) is performed discontinuously or continuously.

12. The process according to any of claims 1 to 11, wherein the mixture obtained in step b) is subjected to stirring before performing step c).

13. The process according to claim 12, wherein the stirring is of the mechanical, magnetic, or electrostatic type.

14. The process according to claim 13, wherein stirring is of the mechanical type.

15. The process according to any of claims 1 to 14, wherein the pH and/or the temperature of the aqueous matrix comprising microplastics of step a) is conditioned before performing step b) such that:
- the pH is in the range of 1 to 13, and/or
- the temperature is in the range of 5 to 95°C.

16. The process according to claim 15, wherein the pH and/or the temperature of the aqueous matrix comprising microplastics of step a) is conditioned before performing step b) such that:
- the pH is in the range of 3 to 10, and/or
- the temperature is in the range of 15 to 35°C.

17. The process according to any of claims 1 to 16, wherein the separation of the microplastic/magnetic iron mineral particle aggregates of the aqueous matrix of step c) is performed using magnets or electromagnets.

18. The process according to any of claims 1 to 17, wherein the magnetic iron mineral particles of the microplastic/magnetic iron mineral particle aggregates separated in step c) are recovered so as to be reused.

19. The process according to claim 18, wherein the recovery is performed by means of a heat treatment.

20. The process according to claim 19, wherein the heat treatment comprises heating the microplastic/magnetic iron mineral particle aggregates separated in step c) in air atmosphere to a temperature comprised between 250°C and 600°C at a rate comprised between 0.5 and 20°C min⁻¹.

21. Use of the process defined in any of claims 1 to 20 for water treatment.

22. Use of the process defined in any of claims 1 to 20 for the quantification of microplastics in aqueous matrices.
